# EUROPEAN PATENT SPECIFICATION

(11) **EP 2 695 855 B1**
(45) Date of publication and mention of the grant of the patent: **01.11.2017**
(21) Application number: 12005748.4
(22) Date of filing: 08.08.2012
(51) Int. Cl.: C01B 3/50, C01B 3/06, B01J 8/00, B01J 8/20, H01M 8/065, B01J 7/02, H01M 8/04082

(54) **Hydrogen generator**
Wasserstoffgenerator
Générateur d'hydrogène

(43) Date of publication of application: 12.02.2014
(73) Proprietor: Airbus Defence and Space GmbH, 85521 Ottobrunn (DE)
(72) Inventor: Godula-Jopek, Agata, 82024 Taufkirchen (DE); Brandstetter, Armin, 81927 München (DE); Stobinski, Leszek, 03-337 Warschau (PL)
(74) Representative: LKGLOBAL Lorenz & Kopf PartG mbB Patentanwälte

(56) References cited:
- EP-A2- 1 514 839
- US-A1- 2006 228 293
- US-A1- 2009 110 974
- US-A1- 2011 236 729
- US-A1- 2012 174 984

## Description

### FIELD OF THE INVENTION

The present invention relates to the generation of hydrogen, and relates in particular to a hydrogen generator for providing hydrogen from a suspension, to a system for generating hydrogen, to a vehicle at least partly operated by hydrogen, and to a method for generating hydrogen, as well as to a use of a hydrogen generator in a vehicle, and to a use of a system for generating hydrogen in a vehicle.

### BACKGROUND OF THE INVENTION

For the generation of hydrogen, reactors are used for providing hydrogen, for example in remote environments, or also for use onboard a vehicle. As an example, metal-hydrides are mixed with water, providing a reaction mixture inside a tank. Hydrogen can then be collected or captured and separated for further use. Another example among further examples is the provision of pulverised pure Sodium (Na) in liquid silicone oil. For providing the mixture of metal-hydrides and water, mechanical mixing apparatuses are known. Further, acoustic mixing devices are known. For example, DE 10 2005 039 061 A1 describes a method for generating hydrogen from a complex metal-hydride. However, it has been shown that predetermined volumes are often required for an efficient operation, thus allowing a production of hydrogen only in a small spectrum, relating to the amount that can be produced.

US 2009/110974 A1 relates to a fuel cell system that includes a fuel cell stack for generating electric energy by an electrochemical reaction of hydrogen and oxygen. Further, a hydride tank for storing a liquid hydride is provided and a liquid catalyst tank for storing a liquid catalyst for promoting a hydrogen gas generation reaction from the liquid hydride. Still further, a reaction flow channel for promoting laminar flow of the liquid hydride and the liquid catalyst is provided and a hydrogen separator for storing the hydrogen gas generated from the reaction flow channel and transferring the hydrogen gas to the fuel cell stack. US 2006/228293 A1 describes a method of producing hydrogen which method comprises reacting a hydrogenated compound and water. The hydrogenated compound is in contact with, or may be mixed with an oily substance. US 2011/236729 A1 relates to a system that consists of a Hydrogen production device made up of a chamber for hydrolysing a metal hydride, separated by a thin membrane superposed on a rigid grid from at least one reservoir containing a liquid solution for the reaction, with at least one hydride-based nanoscale element.

### SUMMARY OF THE INVENTION

There may be a need to provide a hydrogen generator with an increased an improved bandwidth of use, i.e. a hydrogen generator with an optimized usability range.

The object of the present invention is solved by the subject-matter of the independent claims, wherein further embodiments are incorporated in the dependent claims.

It should be noted that the following described aspects of the invention apply also for the hydrogen generator for providing hydrogen from a suspension, the system for generating hydrogen, the vehicle at least partly operated by hydrogen, and the method for generating hydrogen, as well as to the use of a hydrogen generator in a vehicle, and the use of a system for generating hydrogen in a vehicle.

According to a first aspect of the present invention, a hydrogen generator for providing hydrogen from a suspension is provided, comprising at least one housing enclosing a generator volume comprising a primary reaction volume for providing a reaction mixture. The at least one housing is enclosing also a collection volume for capturing hydrogen emitting from the reaction volume. Further, a first plurality of first inlets and a second plurality of second inlets is provided. The first inlets are provided for injecting a first liquid with a first part of a reaction mixture into the reaction volume. The first liquid is a suspension comprising silicone oil. The second inlets are provided for injecting a second liquid with a second part of the reaction mixture into the reaction volume. The second liquid comprises water. The first and the second part of the reaction mixture are configured for reacting in a chemical reaction to generate hydrogen. A barrier is provided between the reaction volume and the collection volume, which barrier is adaptable in its position to provide different ratio of reaction volume to collection volume. The barrier is permeable to gaseous hydrogen, and the barrier provides at least a barrier function to water steam.

In one example, the first liquid comprises the silicone oil as a first carrier liquid and a hydrogen source material as the first part of the reaction mixture. The second liquid comprises water as a second carrier liquid and a catalyst substance as the second part of the reaction mixture.

In another example, the first liquid comprises the silicone oil as a first carrier liquid and a reaction substance as the first part of the reaction mixture. The second liquid comprises water as a hydrogen source material as the second part of the reaction mixture.

The term "barrier" relates to providing a separating or selecting function for water steam. The hydrogen can pass the barrier, whereas the water steam is hindered or even completely blocked in passing the barrier. The barrier provides a cleaning or rinsing of the drawn-off gaseous reaction product, or discharged gaseous reaction product. The cleaning or rinsing is provided by the passing through of only hydrogen, and stopping or at least hindering water steam to penetrate. Also, particulate material, such as suspended solids, e.g. salts, are filtered by the barrier layer, for example, when these are suspended in water steam. By the barrier, the reaction volume is adaptable in size, i.e. a scalable volume is provided. The barrier may comprise a membrane layer permeable to hydrogen and impermeable to water steam. In another example, the barrier layer comprises a silicone oil layer, which silicone oil layer is permeable to hydrogen and impermeable to water steam.

According to the invention, the barrier layer comprises a support structure to stabilize a purification layer, which layer is permeable to hydrogen and impermeable to water steam. The support structure is movably supported in relation to the volume for adaptively dividing the volume into the reaction volume and the collection volume. The purification layer is consecutively renewable during operation.

According to an exemplary embodiment, the purification layer is a silicone oil layer. The purification layer may also comprise a mineral oil product, organic and inorganic oils, or glycerines, in addition or as an alternative to silicone oil.

The first inlets are configured such that the suspension is injected into the carrier liquid. For example, the suspension is injected into the carrier liquid in small droplets, for example approximately 1 mm in size.

In one example, the inlets are attached to the support structure. The inlets are oriented downwards, such that the injection of the carrier liquid and the injection of the suspension are provided from an upper area of the generator.

In another example, the outlet openings of the first inlets are provided on an inner bottom surface of the housing, and the outlet openings are provided spaced apart from the bottom surface.

In a further example, at least a part of the first inlets may be arranged coaxially with one of the second inlets. The outlet openings of the second inlets are provided with tapered side walls, such that a jet of carrier material is pressed inwardly into a suspension jet, ejected from the first inlets.

In one example, the support structure is suspend from above or supported from below by activation means in dependency from the level of the current reaction liquid level.

According to an exemplary embodiment, the support structure is provided as a floating grid to swim on a reaction mixture liquid level.

The floating grid may be provided as a plastic grid with floating elements, e.g. silicone swimmers. The floating grid may be provided with a flexible grid with a flexible plane, or bendable plane.

According to an exemplary embodiment, the support structure is provided with guiding means for guiding gaseous bubbles generated in the reaction mixture liquid towards at least one side edge of the support structure. The guiding means comprise inclined surfaces and/or inclined grooves.

For example, the side edges are the boundaries of the support structure. The floating grid may be swimming on top of the carrier material.

According to an exemplary embodiment, the support structure is provided with a plurality of cooling elements.

The cooling elements may be provided as small or micro cooling pipes, or as thermal transfer elements, which are connectable to a source of cooling energy, for example, active cooling elements connected to a heat exchanger.

At least one lateral sealing may be provided between the housing and the floating grid.

It must be noted that according to a further example, a silicone oil layer, or other material layer, is provided as a barrier between the primary reaction volume and the collection volume, where the barrier is fixed in its position, for example by means of a fixed or stabilized support structure. It must be noted further, that such an example can also be combined with the other described examples in the forgoing and in the following.

According to an exemplary embodiment, at least one lateral drainage opening is provided on a side wall of the housing. An overflow chamber is provided, wherein the at least one lateral drainage opening opens into the overflow chamber. The overflow chamber discharges into an after-reaction chamber for a secondary generation of hydrogen. The after-reaction chamber is also referred to as secondary reaction volume.

For example, a plurality of lateral drainage openings is provided with a vertical distance to each other, in order to provide a balanced water level. For example, in an increased mass throughput, or mass flow rate, the water level raises, lifting the floating grid and additional openings of the plurality or openings are exposed to the water level. The at least one lateral drainage opening may be provided as a drainage groove.

Further, at least one drainage or discharge outlet is provided on the bottom surface.

According to an exemplary embodiment, at least one drainage opening is provided for discharging raised liquid from the reaction volume. In addition, or alternatively, at least one outlet opening for discharging hydrogen from the collection volume is provided. Still further, also additionally or alternatively, at least one rinse opening near a lower base of a side wall with at least one lateral drainage opening is provided, wherein the rinse opening is configured or emitting a water jet for cleaning the at least one lateral drainage opening. Thus, the inner side walls are protected against encrusting due to the rinsing function.

According to an exemplary embodiment, a heat exchanger is provided inside the generator volume, for example inside the collection volume, for withdrawing heat energy from the inside of the collection volume.

According to an exemplary embodiment, the reaction volume comprises the first liquid and the second liquid providing the reaction mixture of the first and the second parts. The silicone oil comprises a first silicone oil part with a density smaller than the density of water, and a second silicone oil part with a density larger than the density of water. It is further provided:
I) that the first liquid comprises the silicone oil as a first carrier liquid and a hydrogen source material as the first part of the reaction mixture; and
   the second liquid comprises water as a second carrier liquid and a catalyst substance as the second part of the reaction mixture; or
II) that the first liquid comprises the silicone oil as a first carrier liquid and a reaction substance as the first part of the reaction mixture; and
   the second liquid comprises water as a hydrogen source material as the second part of the reaction mixture.

For example, the suspension is a pulp suspension of sodium borohydride (NaBH₄). For example, the first silicone oil part has a density of smaller than approximately 0.95 kg/l, and the second silicone oil part has a density of larger than approximately 1.05 kg/l. The ratio or fraction of the first silicone oil part may be smaller than the ratio or fraction of the second silicone oil part. For example, the first silicone oil part is provided in a volume amount of approximately 5 % to 30 %, for example approximately 10 %, and the second silicone oil part is provided in a volume amount of approximately 95 % to 70 %, for example approximately 90 %.

As the barrier, an oil film is provided on the upper side of the carrier material. For example, the oil film is provided by the first silicone oil part.

According to an exemplary embodiment, a plurality of housings is provided, each enclosing a generator volume. Further, at least two housings are each provided with an overflow chamber discharging in a common after-reaction chamber for the secondary generation of hydrogen.

The housings may be provided with a rectangular form in a plan view, or with hexagonal form, or circular form, and displaced to each other such that the after reaction chambers are provided in-between. The housings may be provided with a round shape in a plan view, and the resulting rest spaces are used for the after-reaction chamber. The housings may thus be provided contacting each other at certain instances, or completely displaced to each other. For example, a two-dimensional grid with rows and columns is provided for the housings. In another example, the housings are provided with a rectangular form, and are attached to each other on their end faces. The common after-reaction chambers are provided at least along the longitudinal sides.

According to a second aspect, a system for generating hydrogen is provided, comprising a first storage device and a second storage device. The first storage device is provided for storing a first liquid with a first part of a reaction mixture; wherein the first liquid is a suspension comprising silicone oil. The second storage device is provided for storing a second liquid with a second part of the reaction mixture, wherein the second liquid comprises water. The first and the second part of the reaction mixture are configured to react in a chemical reaction to generate hydrogen. Further, a hydrogen extraction point is provided. Still further, a hydrogen generator according to one of the above-mentioned examples is provided. The first storage device provides the first liquid to the first inlets, and the second storage device provides the second liquid to the second inlets.

The first liquid may comprise a hydrogen source material such as metal-hydrides and the second liquid may comprise water as a carrier material with a catalyst substance.

For example, a hydrogen storage device is provided, which is connected to a hydrogen extraction point. Further, it is also possible to connect a consumer device, for example a hydrogen operated driving means, to the hydrogen extraction point or the hydrogen storage device.

According to a third aspect, a vehicle at least partly operated by hydrogen is provided, comprising hydrogen operated driving means, and a hydrogen source. As the hydrogen source, a system for generating hydrogen according the above-mentioned examples is provided. Further, the hydrogen source provides hydrogen for driving the hydrogen operated driving means. The driving source may be a fuel cell or a combustion engine, for example.

For example, the hydrogen can be provided so-to-speak on demand. Thus, storage means can be reduced to a minimum or even avoided completely. A buffer device can be provided for balancing small differences between production capacity, which is adaptable due to the adaptable barrier, and the hydrogen consumption.

The vehicle may be an aircraft, such as an airplane or a helicopter. The vehicle may also be a boat. The vehicle may still further be an automotive, such as a car, a coach, or a truck. The vehicle may also be provided as a train.

In another example, a stationary arrangement, for example a power plant, is provided that is at least partly operated by hydrogen, comprising hydrogen operated systems or apparatus, and a hydrogen source. As the hydrogen source, a system for generating hydrogen according the above-mentioned examples is provided. Further, the hydrogen source provides hydrogen for driving the hydrogen operated systems or apparatus, for example for providing electric energy. Thus, it is possible to provide hydrogen in dependency from an actual demand. For example, storage means can be reduced to a minimum or can be avoided even completely. For balancing smaller purposes to align differences in production capacity and hydrogen consumption, a buffer device can be provided. For stationary operation of a power plant with hydrogen, for example, up to approximately 40 m³/s may be required at normal pressure, or approximately 450 g/s up to approximately 3500 g/s. By providing a scalable setup of reactors according to the present invention, such large amounts can be provided and supplied in stationary power plants.

According to a fourth aspect, a method for generating hydrogen is provided, comprising the following steps:
a1) Supplying a first liquid with a first part of a reaction mixture into a reaction volume; wherein the first liquid is a suspension comprising silicone oil. The silicone oil comprises a first silicone oil part with a density smaller than the density of water, and a second silicone oil part with a density larger than the density of water.
a2) Supplying a second liquid with a second part of the reaction mixture into the reaction volume; wherein the second liquid comprises water. The first and the second part of the reaction mixture are provided for reacting in a chemical reaction in which hydrogen is generated.
b) Providing a silicone layer on the top of the reaction mixture level by the first silicone oil. The silicone layer provides a barrier for water steam and silicone layer is permeable for hydrogen.
c) Reacting of the reaction mixture, generating gaseous hydrogen.
d) Passing of the hydrogen through the barrier.
e) Providing the hydrogen for further purposes.

The suspension of the first liquid may comprise the silicone oil as a carrier liquid and a hydrogen source material, for example a metal-hydride material. The water of the second liquid may be provided as a carrier material, or carrier liquid, together with a catalyst substance.

The reaction may be conducted as pyrolytic reaction and/or hydrolytic under high pressures and high temperatures. For example, the term "high pressure" relates to a pressure of approximately minimum 20 bar inside the reaction chamber. Further, high temperatures are provided for the above-mentioned reaction. For example, the term "high pressure" relates to a temperature of approximately 200 °C inside the reaction chamber.

According to a fifth aspect, a use of a hydrogen generator according to one of the above-mentioned examples in a vehicle is provided. According to a still further aspect, a use of a system for generating hydrogen according to one of the above-mentioned examples, in a vehicle is provided.

The vehicle may be an aircraft, a ship, a train, or an automotive, to name only a few examples.

According to an aspect of the present invention, the generator volume is divided into two different sections, namely a first part for receiving the reaction mixture, i.e. the liquid in which the reaction takes place, and a second part for receiving the thus produced hydrogen gas. The separation is achieved with a separation layer that is capable of being passed by the hydrogen, and which blocks off or at least hinders the passing of water steam and other substances to at least a great extent, thus providing a cleaning function. By provided one of the substances for the reaction mixture, to comprise a silicone oil that is lighter than the water provided for the reaction, the barrier layer is so-to-speak already present in the basic components for the reaction. Thus, the silicone oil provided to the reaction chamber during the process of production leads to a swimming barrier, which is then capable of following different levels of the reaction mixture, for example when achieving larger or smaller throughputs, i.e. smaller or larger amounts of hydrogen to be produced. A further advantage of the so-to-speak imminent silicone oil barrier layer is the capability of constantly replacing and thus refreshing the barrier. For example, when the reaction takes place and the reaction products contact the barrier layer and the hydrogen passes the barrier layer, at the same time so-to-speak collecting or filtering off further unwanted substances takes place. Thus, the silicon, which is itself lighter than the water, is becoming increasingly heavy, up to an extent where the thus soaked or contaminated silicone is heavier than water and begins to sink to the bottom of the reaction volume. At the bottom, the used silicone oil can be discharged or drained off.

These and other aspects of the present invention will become apparent from and be elucidated with reference to the embodiments described hereinafter.

### BRIEF DESCRIPTION OF THE DRAWINGS

Exemplary embodiments of the invention will be described in the following with reference to the figures 2 to 16:
- Fig. 1: shows a hydrogen generator for providing hydrogen from a suspension in a schematic cross section (not according to the invention);
- Fig. 2: shows an example of a hydrogen generator;
- Fig. 3: shows a still further example of a hydrogen generator;
- Fig. 4: shows an example of inlets of a hydrogen generator;
- Fig. 5: shows a further example of inlets in a cross-section;
- Fig. 6: shows a further example of a hydrogen generator in a cross-section;
- Figs. 7 to 9: show further examples of hydrogen generators in a cross-section;
- Fig. 10: shows a further example of a hydrogen generator;
- Fig. 11: shows a further example of a hydrogen generator with two housings and a common chamber in-between;
- Fig. 12: shows a still further example of a hydrogen generator with two adjacent after-reaction chambers for secondary generation of hydrogen;
- Fig. 13: shows six examples of hydrogen generators with a number of housings in a top or plan view in a schematic illustration in Figs. 13A to 13F;
- Fig. 14: shows an example of a system for generating hydrogen in a schematic setup;
- Fig. 15: shows an example of a vehicle at least partly operated by hydrogen in a schematic functional diagram; and
- Fig. 16: shows basic steps of a method for generating hydrogen according to an exemplary embodiment.

### DETAILED DESCRIPTION OF EXEMPLARY EMBODIMENTS

As an example for hydrogen generation, metal-hydride suspensions are used. For example, NaBH₄ pulp suspensions are mixed with water for hydrogen production. For the preparation of NaBH₄ pulp suspension, granules of NaBH₄ are added with a liquid, comprising water and metal salts free liquid medium, thus leading to NaBH₄ pulp suspension which can be stored and transported in hermetic containers and tanks. For the hydrogen production, the NaBH₄ pulp suspension can be mixed with water, resulting in gaseous hydrogen, and of course waste to be handled in further treatments steps or storage and transportation steps. The hydrogen can be used, for example, to operate proton exchange membrane fuel cells or gas turbines, just to mention a few examples.

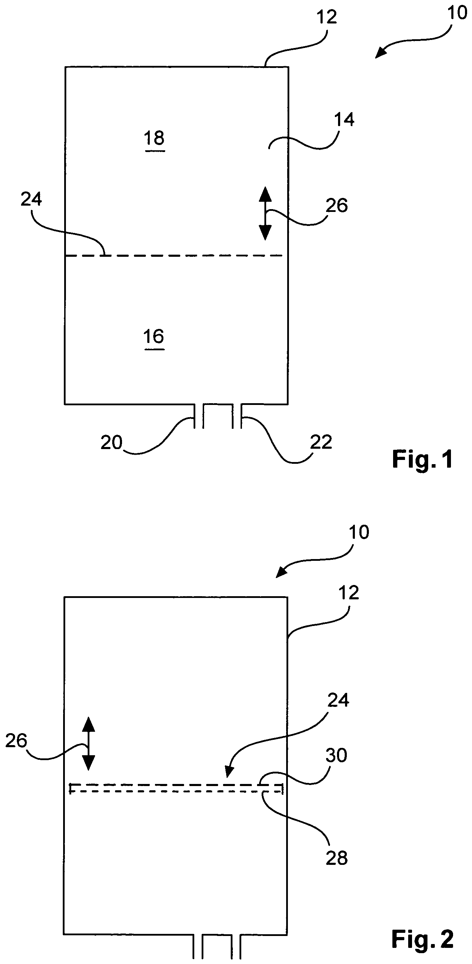

Fig. 1 shows a hydrogen generator 10 for providing hydrogen from a suspension, comprising at least one housing 12, enclosing a generator volume 14, comprising a primary reaction volume 16 for providing a reaction mixture, and a collection volume 18 for capturing hydrogen emitting from the reaction volume. Further, a first plurality of first inlets 20 is provided for injecting a first liquid with a first part of a reaction mixture into the reaction volume, wherein the first liquid is a suspension comprising silicone oil. For example, the suspension comprises a carrier liquid and a hydrogen source material as the first part of a reaction mixture. Still further, a second plurality of second inlets 22 is provided for injecting a second liquid with a second part of the reaction mixture into the reaction volume, wherein the second liquid comprises water. For example, the water is provided as carrier material together with a catalyst substance as the second part of the reaction mixture. The first and the second part of the reaction mixture are configured for reacting in a chemical reaction to generate hydrogen. A barrier 24 is provided between the reaction volume and the collection volume, which barrier is adaptable in its position to provide different ratio of reaction volume to collection volume. The adaptability is indicated with a double arrow 26. Further, the barrier 24 is permeable to gaseous hydrogen, which is indicated by showing the barrier 24 with a dashed line. The barrier 24 is further providing at least a barrier function to water steam. Thus, the hydrogen can pass the barrier, whereas the water steam is hindered or even completely blocked in passing the barrier 24.

Fig. 2 shows a further example of the hydrogen generator 10, wherein the barrier layer 24 comprises a support structure 28 to stabilize a purification layer 30, which layer is permeable to hydrogen and impermeable to water steam. The support structure 28 is movably supported in relation to the volume for adaptively dividing the volume into the reaction volume 16 and the collection volume 18. Further, the purification layer 30 is consecutively renewable during operation.

For example, the purification layer is a silicone oil layer.

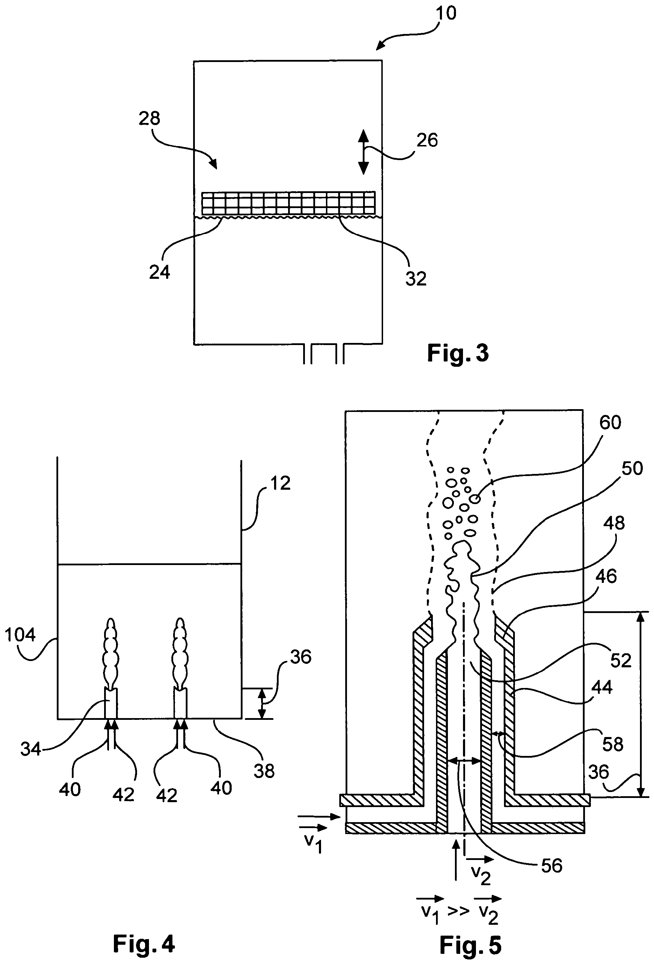

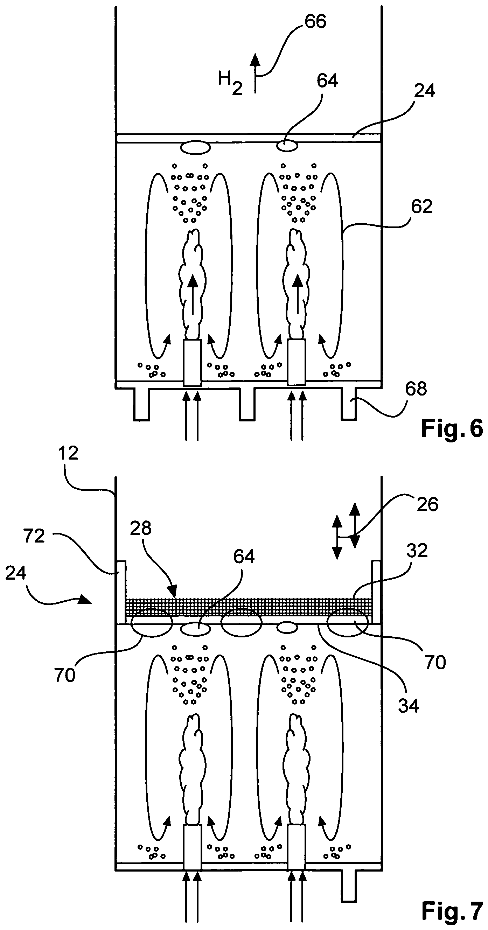

Fig. 3 shows a further example of the hydrogen generator 10, wherein the support structure 28 is provided as a floating grid 32 to swim on a reaction mixture liquid level 34. For example, the floating grid may be provided as a plastic grid with floating elements, for example silicone swimmers (see also Figs. 6 et seq.).

Fig. 4 relates to the above-mentioned inlets 20, 22, which are provided as integrated inlets 34. The outlet openings of the integrated inlets 34 are arranged with a distance 36 to a bottom surface 38 of the housing 12. A first arrow 40 indicates the provision of a suspension for example, and a second arrow 42 indicates the provision of the carrier liquid for example, comprising water as carrier material, together with a catalyst substance.

In order to provide an efficient mixture and generation of small as possible silicone droplets, a coaxial arrangement is shown in Fig. 5. An inner inlet 44 is provided for injecting the suspension. Further, an outer inlet 46, enclosing the inner inlet 44 is provided for the injection of the carrier liquid comprising water. The outer inlet 46 has tapered side wall portions 48 near an opening 50, such that a jet of carrier liquid is pressed inwardly into a suspension jet ejected from an opening 52 of the inner inlets 44. Thus, the inner inlets 44 are providing the first inlets, and the outer inlet 46 provides the second inlets. For feeding of the outer inlets 46, a double bottom surface may provide a hollow space 54 through which a first volume stream V1 is provided. A second volume stream V2 is provided in the inner hollow space of the inner inlets. For example, the volume stream V1 is larger than the volume stream V2. Thus, the water stream has a higher speed than the suspension stream.

As an example only, an inner diameter 56 of approximately 5 mm is provided, in combination with a distance 58 between the outer side of the inner inlets and the inner side of the outer inlets of approximately 1 mm.

Thus, small droplets 60 are provided. This is in particular of importance, because it results, for example, in the metal-hydride to get into contact with water in a faster manner, in order to begin the hydrolytic reaction. Further, small droplets are easier to be destroyed by the formation of gas, and thus a more complete reaction is achievable. Further, small amounts of lighter oil can be separated from the suspension and reaction products. Of course, similar is the case for a reaction of sodium with water, the latter being the hydrogen source.

As shown in Fig. 6, by providing the feed of the suspensions with the distance 36 (see Fig. 5) from the bottom layer, and in particular supported by the release of thermal energy, a swirling motion mixing the liquid is induced, indicated with arrow 62, which also leads to an increased temporal stay of the droplets in the water, since these can be captured by the resulting stream a few times. In Fig. 6, the above-mentioned barrier 24 is shown, for example provided by silicone oil, lighter than water. Thus, water steam, as indicated with reference numeral 64 is hindered in passing the barrier layer 24, whereas hydrogen can pass the barrier 24, which hydrogen is indicated with arrow 66. Fig. 6 shows also a further feature, which however is not a necessary feature to be combined with the other features described above. Fig. 6 shows a number of drainage openings 68 for discharging waste liquid from the reaction volume.

Fig. 7 shows the support structure 28 as the floating grid 32 to swim on the carrier liquid level 34. For the swimming support, silicone swimmers 70 are provided. A double arrow 26 indicates the adaptability of the vertical position of the barrier 24.

The support structure 28 is provided with lateral sealings 72 between the housing 12 and the floating grid 32. For example, the sealings 72 are attached to the floating grid 32. The lateral sealings of the floating grid are also provided for closing off lateral openings arranged above, thus preventing that water steam and gas can reach the upper volume in an unfiltered way. For example, the lateral sealings are provided with silicone as material. However, a material that is soaking silicone oil can also be provided, allowing better sealing properties and reduced friction forces. Further, felt-like structures can also be provided for the lateral sealings.

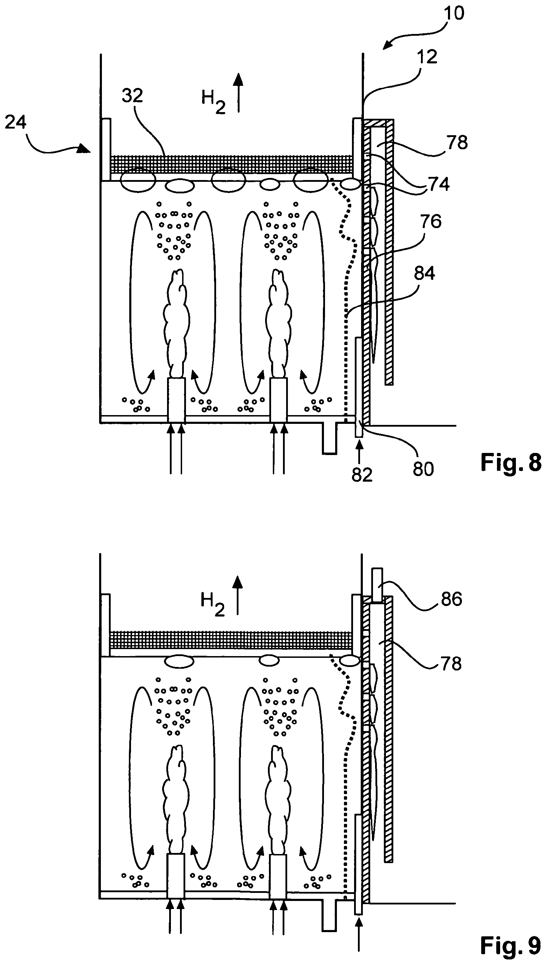

Fig. 8 shows a further example of the hydrogen generator 10 where a number of lateral drainage openings 74 is provided on a side wall 76 of the housing 12. Further, an overflow chamber 78 is provided and the at least one lateral drainage opening 74 opens into the overflow chamber 78.

As can be seen, the lateral drainage openings 74 are provided with a vertical distance to each other in order to provide a balanced water level. For example, in an increased mass through put, the floating grid 32 is lifted and a further one of the lateral drainage openings 74 is exposed to the water level. Thus, a further amount of water can flow into the overflow chamber 78.

Fig. 8 also shows a further aspect, which can be combined with one of the above-mentioned examples, or also with one of the further mentioned examples below. It must be noted that this further feature is shown as only an option in Fig. 8. A rinse opening 80 near a lower base of a side wall with the at least one lateral drainage openings 74 is provided. The rinse opening 80 is configured for emitting a water jet for cleaning the at least one lateral drainage opening 74. An arrow 82 indicates the provision of wall rinsing liquid.

A still further feature is shown as an option in Fig. 8, namely a flexible drawn-off conduit 84 for drawing off silicone oil from the barrier 24. The conduit can be provided as a flexible silicone drainage pipe that can prevent an increase of the barrier film in a too large amount.

A further feature is shown in Fig. 9 in form of a supply opening 86 for providing fresh or light silicone oil to the interior walls of the overflow chamber 78. For example, the provided silicone oil can be cooled.

The lateral drainage openings can also be used for leading away or drawing off gaseous bubbles, for example water steam, or water steam with hydrogen.

In order to support the transport or travel of the steam bubbles 64, the support structure 28 is provided with guiding means (not further shown in detail) for guiding gaseous bubbles generated in the reaction mixture liquid towards at least one side edge of the support structure. The guiding means may comprise inclined surfaces and/or inclined roofs.

According to a further example, the support structure 28 is provided with a plurality of cooling elements (not further shown). For example, the cooling elements may be provided as small cooling pipes, for example integrated in the grid structure of the floating grid 32.

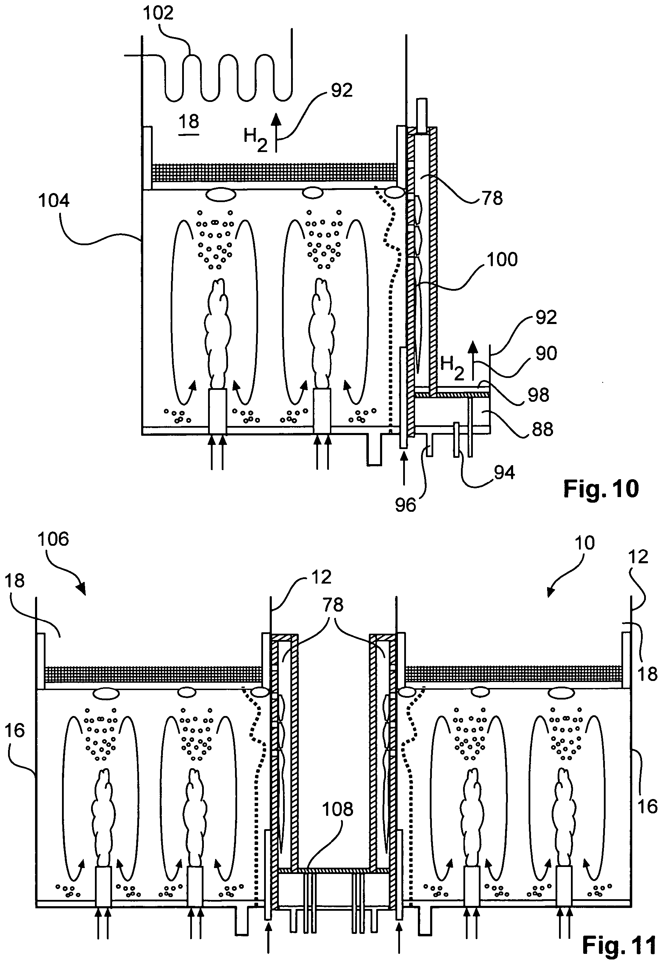

In Fig. 10, the overflow chamber 78 discharges into an after-reaction chamber 88 for a secondary generation of hydrogen, indicated with a secondary arrow 90.

Thus, in addition to the primary generation, indicated with an arrow 92, an efficient use of the reaction process is provided. The after-reaction chamber 88 is indicated with a side wall 92, a secondary discharge opening 94 for water, a secondary discharge opening 96 for the drainage of waist products collected at the bottom of the chamber. The after-reaction chamber 88 may also be provided with a floating grid structure 98. The so-to-speak waterfall, as indicated with reference numeral 100 may also provide a rinsing procedure for the gaseous medium and a mixing injection of the falling liquid into the after-reaction chamber 88.

According to a further example, a heat exchanger 102 is provided inside the collection volume 18 for withdrawing heat energy from the inside of the collection volume. This is indicated in Fig. 10, but must be understood as an option only. For example, the water to be injected into the reaction volume 16 may be conducted such to pass the heat exchanger 102, thus drawing off thermal energy from the volume comprising the generated hydrogen. This supports the approach to reduce the amount of water steam in the collection volume 18 to a minimum.

According to a further example, the reaction volume comprises the first liquid and the second liquid providing a reaction mixture 104 of the first and the second parts, as shown in Fig. 4 et seq. For example, the reaction mixture comprises a mixture of the suspension and the carrier liquid. The suspension may be provided as silicone oil, and the hydrogen source material may be provided as metal-hydride material. As mentioned above, the silicone oil comprises a first silicone oil part with a density smaller than the density of water, and a second silicone oil part with a density larger than the density of water. For example, the suspension is a pulp suspension of sodium borohydride, NaBH₄. In another example, the first liquid comprises the silicone oil as a first carrier liquid and a reaction substance as the first part of the reaction mixture, and the second liquid comprises water as a hydrogen source material as the second part of the reaction mixture.

Fig. 11 indicates a further example of the hydrogen generator 10, comprising a plurality 106 of housings 12, each enclosing a generator volume 14 with a primary reaction volume 16 and a collection volume 18. The at least two housings 12 are each provided with an overflow chamber 78 discharging in a common after-reaction chamber 108 for the secondary generation of hydrogen.

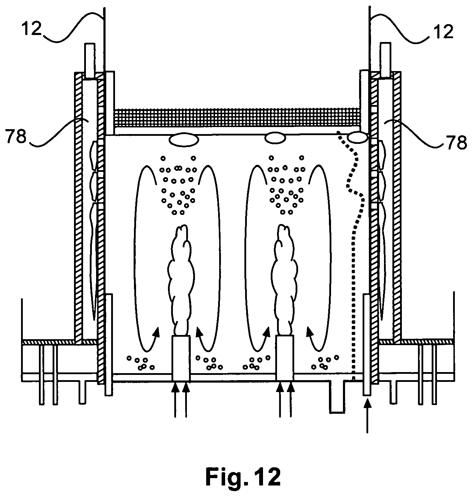

Fig. 11 shows the housings 12 to be provided with the overflow chamber 78, the lateral drainage openings 74 only on one side, whereas Fig. 12 shows an example with a housing 12 having an overflow chamber 78 on at least two sides, for example on opposite sides.

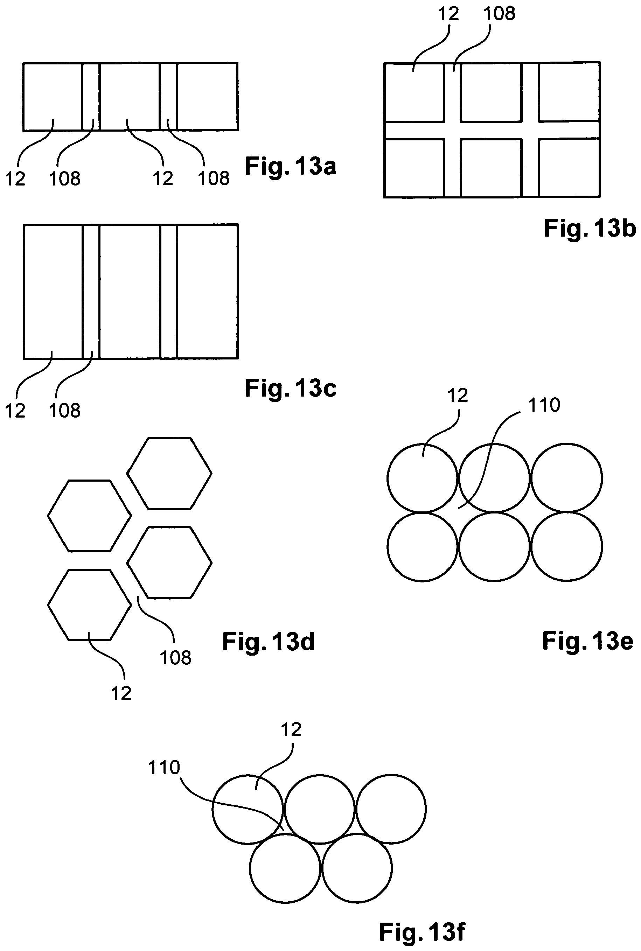

In Fig. 13A to 13F, a number of different arrangements of the hydrogen generator having the plurality 106 of housings 12 is shown in schematic top views. According to the example in Fig. 13A, the housings 12 may be provided with a rectangular or square form and displaced such that in a row of housings, the common after-reaction chamber 108 is provided in-between two adjacent housings 12. Fig. 13B shows an example of a number of housings 12 arranged in rows and columns and a grid-like common after-reaction chamber 108 comprising different portions that can be connected to each other, as shown, or can be separated into separate chambers (not further shown). Fig. 13C shows an example of housings 12 having a rectangular form, where the common after-reaction chambers are provided along the longitudinal sides, thus ensuring that sufficient lateral drainage openings can be provided. According to a further example, not further shown, a further number of rectangular housings 12 is provided, attached to the adjacent housing 12 on the end faces. Fig. 13D shows housings 12 with a hexagonal shape and a resulting grid-like structure for the common after-reaction chambers 108. Fig. 13E shows a plurality of circular housings 12 and resulting rest spaces 110 providing space for the after-reaction chambers 108. Fig. 13E shows a rectangular displacement of the circular housings 12, whereas Fig. 13F shows a more compact arrangement of the circular housings resulting in smaller rest spaces in-between for the after-reaction chambers 88. Providing circular housings comprises the advantage that a minimum of wall surface has to be provided for enclosing a maximum volume size, and also edges of a sealing between a floating grid and the side walls are avoided. By letting the circular housings touch each other, a further stability is provided. Of course, it is also possible to provide circular housings 12 displaced from the adjacent housing such that a continuous rest space is provided for the after-reaction chamber.

According to another example (not shown in detail), a stationary arrangement is provided, e.g. a power plant. The plant is provided with hydrogen operated systems or apparatus, and a hydrogen source. The hydrogen source is a system for generating hydrogen according to the above-mentioned examples. The hydrogen source generates hydrogen for driving the hydrogen operated systems or apparatus and supplies the hydrogen to the latter, for example for providing electric energy. for example, a number of hydrogen sources can be assembled and connected to provided a hydrogen generator with an enlarged scalability, for example for driving one or several gas turbines.

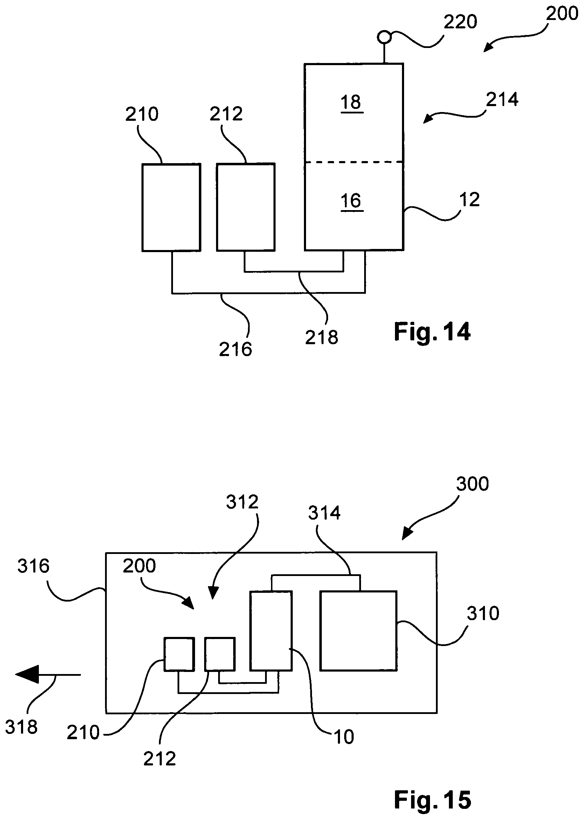

Fig. 14 shows a schematic setup of a system 200 for generating hydrogen, comprising a first storage device 210 for storing a first liquid with a first part of a reaction mixture, wherein the first liquid is a suspension comprising silicone oil. Further, a second storage device 212 for storing a second liquid with a second part of the reaction mixture is provided, wherein the second liquid comprises water. The first and the second part of the reaction mixture are configured to react in a chemical reaction to generate hydrogen. For example, the water is provided as carrier material together with a catalyst substance as a second part of the reaction mixture. Further, a hydrogen generator 214 in accordance with one of the above described examples for the hydrogen generator 10 is provided. Schematic connection lines 216, 218 indicate the connection of the storage devices 210, 212 with the hydrogen generator 214. It must be noted that the separate connecting lines are shown schematically only and do not mean an injection of the respective liquid or material separated from each other. Further, a hydrogen extraction point 220 is provided. The first storage device 210 provides the first liquid, for example comprising the hydrogen source material, to the first inlets (not further shown), and the second storage device 212 provides the second liquid, for example water with a catalyst substance, to the second inlets (also not further shown). In another example, the first storage device 210 provides a reaction material to the first inlets and the second storage device 212 provides water as a hydrogen source to the second inlets.

According to a further example, instead of only one housing 12, a number of housings is provided and connected to the storage devices 210, 212 (not further shown in detail).

Fig. 15 shows a vehicle 300 which is at least partly operated by hydrogen, comprising hydrogen operated driving means 310 and a hydrogen source 312. As the hydrogen source 312, a system for generating hydrogen according to the above-mentioned example, indicated with reference numeral 200, is provided. For example, a first storage device 210 and a second storage device 212 are provided in connection with a hydrogen generator 10 providing hydrogen via a supply line 314 to the hydrogen operated driving means 310. Further, a common box 316 enclosing the above mentioned features indicates the provision of the hydrogen generation inside a vehicle, which vehicle and its respective capability for mobility, is indicated with a vehicle arrow 318. The mobility may be provided in form of a driving movement over ground, and/or for uplift and propulsion.

For example, the vehicle is an aircraft, such as an airplane, or a helicopter. In another example, the vehicle is a boat. In a still further example, the vehicle is an automotive, such as a car, a coach, or a truck. In a further example, also not further shown, the vehicle is a train, or other track-guided vehicle such as a tram or subway.

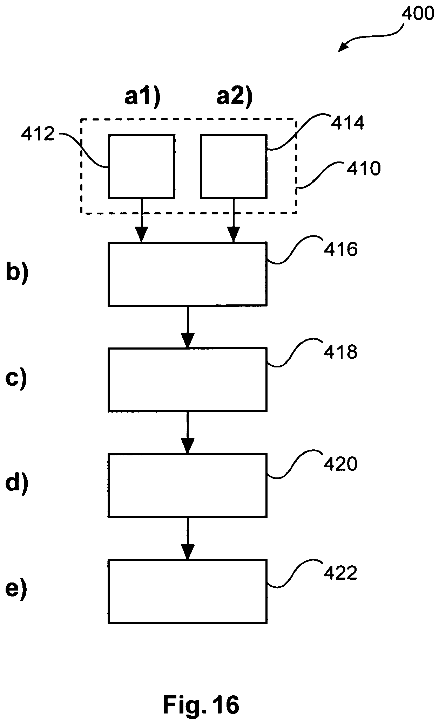

Fig. 16 shows a method 400 for generating hydrogen, comprising the following steps: In a first step 410, a first liquid with a first part of a reaction mixture is supplied in a first sub step 412 into a reaction volume. The first liquid is a suspension comprising silicone oil. The silicone oil comprises a first silicone oil part with a density smaller than the density of water, and a second silicone oil part with a density larger than the density of water. In a second sub step 414, a second liquid with a second part of the reaction mixture is supplied into the reaction volume. The second liquid comprises water. The first and the second part of the reaction mixture are provided for reacting in a chemical reaction in which hydrogen is generated. In a second step 416, a silicone layer is provided on the top of the reaction mixture level by the first silicone oil, which silicone layer provides a barrier for water steam and which silicone layer is permeable for hydrogen. In a third step 418, the reaction mixture takes place, generating gaseous hydrogen. In a fourth step 420, the hydrogen is passing through the barrier. Further, in a fifth step 422, the hydrogen is provided for further purposes.

The first sub step 412 is also referred to as step a1), the second sub step 414 as step a2), the second step 416 as step b), the third step 418 as step c), the fourth step 420 as step d), and the fifth step 422 as step e).

In one example, the first liquid supplied in the first sub step 412 comprises the silicone oil as a first carrier liquid and a hydrogen source material as the first part of the reaction mixture. The second liquid supplied in the second sub step 414 comprises water as a second carrier liquid and a catalyst substance as the second part of the reaction mixture.

In another example, the first liquid supplied in the first sub step 412 comprises the silicone oil as a first carrier liquid and a reaction substance as the first part of the reaction mixture. The second liquid supplied in the second sub step 414 comprises water as a hydrogen source material as the second part of the reaction mixture. The reaction may be conducted as pyrolytic reaction and/or hydrolytic reaction under high pressures and high temperatures (see above).

According to a further example (not further shown) by providing a cleaning function with the silicone layer, encrusting of the inside of the apparatus is avoided, thus increasing the lifetime and efficiency of the generator over time. Thus, encrusting only takes place in a very limited amount. Further, preferably exchangeable components are affected by encrustations.

Due to the position adaptability of the barrier layer, a mixing procedure is provided in which mass streams can be varied over a larger range. Thus, large amounts of hydrogen can be provided with the same type of reactor with only a minimum amount of adaption. This means scalability while providing non-scalable components. Thus, a reactor with an increased range of use is provided. By providing a floating grid, for example, for supporting the silicone oil layer, the feeding or supply of the reaction parts can be provided such that a good mixture inside the volume is provided, thus leading to a rather rough liquid level or surface. However, the supporting structure ensures that the oil film is not broken apart. By providing cooling elements inside the grid, the generation of water steam can be reduced to a minimum. By arranging the cooling elements in the barrier layer, only the silicone oil is cooled; encrustation of the outer sides of the cooling elements is thus prevented.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features. While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims. In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A hydrogen generator (10) for providing hydrogen from a suspension, comprising:
- at least one housing (12) enclosing a generator volume (14) comprising a primary reaction volume (16) for providing a reaction mixture and a collection volume (18) for capturing hydrogen emitting from the reaction volume;
- a first plurality of first inlets (20) for injecting a first liquid with a first part of a reaction mixture into the reaction volume; wherein the first liquid is a suspension comprising silicone oil;
- a second plurality of second inlets (22) for injecting a second liquid with a second part of the reaction mixture into the reaction volume; wherein the second liquid comprises water;
wherein the first and the second part of the reaction mixture are configured for reacting in a chemical reaction to generate hydrogen; and
- a barrier (24) between the reaction volume and the collection volume;
wherein the barrier is adaptable in its position to provide different ratio of reaction volume to collection volume;
wherein the barrier is permeable to gaseous hydrogen; and
wherein the barrier provides at least a barrier function to water steam and wherein the barrier layer comprises a support structure (28) to stabilize a purification layer (30), which layer is permeable to hydrogen and impermeable to water steam;
wherein the support structure is movably supported in relation to the volume for adaptively dividing the volume into the reaction volume and the collection volume; and
wherein the purification layer is consecutively renewable during operation.

2. Hydrogen generator according to claim 1, wherein the purification layer is a silicone oil layer.

3. Hydrogen generator according to claim 1 or 2, wherein the support structure is provided as a floating grid (32) to swim on a reaction mixture liquid level (34).

4. Hydrogen generator according to claim 1, 2 or 3, wherein the support structure is provided with guiding means for guiding gaseous bubbles generated in the reaction mixture liquid towards at least one side edge of the support structure;
wherein the guiding means comprise inclined surfaces and/or inclined grooves.

5. Hydrogen generator according to claim 1, 2, 3 or 4, wherein the support structure is provided with a plurality of cooling elements.

6. Hydrogen generator according to one of the preceding claims, wherein at least one lateral drainage opening (74) is provided on a side wall of the housing; wherein an overflow chamber (78) is provided;
wherein the at least one lateral drainage opening opens into the overflow chamber; and
wherein the overflow chamber discharges into an after-reaction chamber (88) for a secondary generation of hydrogen.

7. Hydrogen generator according to one of the preceding claims, wherein it is provided:
i) at least one drainage opening (68) for discharging waste liquid from the reaction volume;
ii) at least one outlet opening (60) for discharging hydrogen from the collection volume; and / or
iii) at least one rinse opening (80) near a lower base of a side wall with at least one lateral drainage opening; wherein the rinse opening is configured for emitting a water jet for cleaning the at least one lateral drainage opening.

8. Hydrogen generator according to one of the preceding claims, wherein a heat exchanger (102) is provided inside the collection volume for withdrawing heat energy from the inside of the collection volume.

9. Hydrogen generator according to one of the preceding claims, wherein the reaction volume comprises the first liquid and the second liquid providing a reaction mixture (104) of the first and the second parts;
wherein the silicone oil comprises a first silicone oil part with a density smaller than the density of water, and a second silicone oil part with a density larger than the density of water; and
wherein it is provided that:
I) the first liquid comprises the silicone oil as a first carrier liquid and a hydrogen source material as the first part of the reaction mixture; and
the second liquid comprises water as a second carrier liquid and a catalyst substance as the second part of the reaction mixture; or
II) the first liquid comprises the silicone oil as a first carrier liquid and a reaction substance as the first part of the reaction mixture; and
the second liquid comprises water as a hydrogen source material as the second part of the reaction mixture.

10. Hydrogen generator according to one of the preceding claims, wherein a plurality (106) of housings is provided, each enclosing a generator volume; and
wherein at least two housings are each provided with an overflow chamber discharging in a common after-reaction chamber (108) for the secondary generation of hydrogen.

11. A system (200) for generating hydrogen, comprising:
- a first storage device (210) for storing a first liquid with a first part of a reaction mixture; wherein the first liquid is a suspension comprising silicone oil;
- a second storage device (212) for storing a second liquid with a second part of the reaction mixture; wherein the second liquid comprises water;
wherein the first and the second part of the reaction mixture are configured to react in a chemical reaction to generate hydrogen;
- a hydrogen extraction point (220); and
- a hydrogen generator according to one of the claims 1 to 10;
wherein the first storage device provides the first liquid to the first inlets;
and wherein the second storage device provides the second liquid to the second inlets.

12. A vehicle (300) at least partly operated by hydrogen, comprising:
- a hydrogen operated driving means (310); and
- a hydrogen source (312);
wherein, as the hydrogen source, a system for generating hydrogen according to claim 11 is provided; and
wherein the hydrogen source provides hydrogen for driving the hydrogen operated driving means.

13. A method (400) for generating hydrogen with a hydrogen generator according to one of the claims 1 to 10, the method comprising the following steps:
a1) supplying (412) a first liquid with a first part of a reaction mixture into a reaction volume; wherein the first liquid is a suspension comprising silicone oil ;
wherein silicone oil comprises a first silicone oil part with a density smaller than the density of water, and a second silicone oil part with a density larger than the density of water;
a2) supplying (414) a second liquid with a second part of the reaction mixture into the reaction volume; wherein the second liquid comprises water;
wherein the first and the second part of the reaction mixture are provided for reacting in a chemical reaction in which hydrogen is generated;
b) providing (416) a silicone layer on the top of the reaction mixture level by the first silicone oil; which silicone layer provides a barrier for water steam and which silicone layer is permeable for hydrogen;
c) reacting (418) of the reaction mixture, generating gaseous hydrogen;
d) passing (420) of the hydrogen through the barrier; and
e) providing (422) the hydrogen for further purposes.

14. A use of i) a hydrogen generator according to one of the claims 1 to 10, or of ii) a system for generating hydrogen according to claim 11, in a vehicle.

## Patentansprüche

1. Ein Wasserstoffgenerator (10), um Wasserstoff aus einer Suspension zur Verfügung zu stellen, umfassend:
- zumindest ein Gehäuse (12), das ein Generatorvolumen (14) umfasst, mit einem primären Reaktionsvolumen (16), um eine Reaktionsmixtur zur Verfügung zu stellen und ein Sammelvolumen (18), um Wasserstoff aufzunehmen, der von dem Reaktionsvolumen emittiert wird;
- eine erste Anzahl von ersten Einlässen (20), um eine erste Flüssigkeit mit einem ersten Teil einer Reaktionsmixtur in das Reaktionsvolumen einzuspeisen, wobei die erste Flüssigkeit eine Suspension umfassend Silikonöl ist;
- eine zweite Anzahl von zweiten Einlässen (22), um eine zweite Flüssigkeit mit einem zweiten Teil der Reaktionsmixtur in das Reaktionsvolumen einzuspeisen; wobei die zweite Flüssigkeit Wasser umfasst;
wobei der erste und der zweite Teil der Reaktionsmixtur ausgestaltet sind in einer chemischen Reaktion zur Erzeugung von Wasserstoff zu reagieren; und
- eine Barriere (24) zwischen dem Reaktionsvolumen und dem Sammelvolumen;
wobei die Barriere in ihrer Position anpassbar ist, um unterschiedliche Verhältnisse von Reaktionsvolumen zu Sammelvolumen zur Verfügung zu stellen;
wobei die Barriere für gasförmigen Wasserstoff durchgängig ist; und wobei die Barriere zumindest eine Barrierenfunktion für Wasserdampf zur Verfügung stellt und wobei die Barrierenschicht eine Tragestruktur (28) aufweist, um eine Reinigungsschicht (30) zu stabilisieren, wobei die Schicht durchgängig für Wasserstoff und nicht-durchgängig für Wasserdampf ist;
wobei die Trägerstruktur im Verhältnis zu dem Volumen beweglich gehalten ist, um adaptiv das Volumen in das Reaktionsvolumen und das Sammelvolumen zu teilen; und
wobei die Reinigungsschicht fortlaufend während des Betriebs erneuerbar ist.

2. Wasserstoffgenerator nach Anspruch 1, wobei die Reinigungsschicht eine Silikonölschicht ist.

3. Wasserstoffgenerator nach einem der Ansprüche 1 oder 2, wobei die Tragestruktur als ein schwebendes Netz (32) zur Verfügung gestellt ist, um auf dem Flüssigkeitsniveau einer Reaktionsmixtur (34) zu schwimmen.

4. Wasserstoffgenerator nach einem der Ansprüche 1, 2 oder 3, wobei die Tragestruktur Führungsmittel aufweist, um Gasblasen, die in der Reaktionsmixtur erzeugt werden, in Richtung zumindest einer Seitenkante der Tragestruktur zu führen;
wobei die Führungsmittel gewinkelte Oberflächen und/oder gewinkelte Rinnen aufweisen.

5. Wasserstoffgenerator nach einem der Ansprüche 1, 2, 3 oder 4, wobei die Tragestruktur eine Vielzahl von Kühlelementen aufweist.

6. Wasserstoffgenerator nach einem der vorangehenden Ansprüche, wobei zumindest eine seitliche Ableitungsöffnung (74) an einer Seitenwand des Gehäuses vorgesehen ist; wobei eine Überflusskammer (78) vorgesehen ist;
wobei die zumindest eine seitliche Ableitungsöffnung sich in die Überflusskammer öffnet; und
wobei sich die Überflusskammer in eine Nachreaktionskammer (88) zu einer sekundären Wasserstofferzeugung entleert.

7. Wasserstoffgenerator nach einem der vorangehenden Ansprüche umfassend
i) zumindest eine Ablauföffnung (68), um Abfallflüssigkeit von dem Reaktionsvolumen zu entleeren;
ii) zumindest eine Auslassöffnung (60), um Wasserstoff von dem Sammelvolumen zu entleeren; und/oder
iii) zumindest eine Spülöffnung (80) nahe einer unteren Basis einer Seitenwand mit zumindest einer seitlichen Ablauföffiiung;
wobei die Spülöffnung ausgestaltet ist, einen Wasserstrahl zu emittieren, um die zumindest eine seitliche Ablauföffnung zu reinigen.

8. Wasserstoffgenerator nach einem der vorangehenden Ansprüche, wobei ein Wärmetauscher (102) innerhalb des Sammelvolumens vorgesehen ist, um Wärmeenergie von innerhalb des Sammelvolumens zu entziehen.

9. Wasserstoffgenerator nach einem der vorangehenden Ansprüche, wobei das Reaktionsvolumen die erste Flüssigkeit und die zweite Flüssigkeit, die eine Reaktionsmixtur (104) zur Verfügung stellen, in dem ersten und dem zweiten Teil umfasst;
wobei das Silikonöl einen ersten Silikonölpart mit einer Dichte aufweist, die geringer ist als die Dichte von Wasser, und einem zweiten Silikonölpart mit einer Dichte, die größer ist als die Dichte von Wasser; und
wobei vorgesehen ist, dass:
I) die erste Flüssigkeit das Silikonöl als eine erste Trägerflüssigkeit umfasst und ein Wasserstoffquellmaterial als der erste Teil der Reaktionsmischung; und die zweite Flüssigkeit Wasser als eine zweite Trägerflüssigkeit umfasst und eine Katalysatorsubstanz als den zweiten Teil der Reaktionsmixtur; oder
II) die erste Flüssigkeit das Silikonöl als erste Trägerflüssigkeit umfasst und eine Reaktionssubstanz als den zweiten Teil der Reaktionsmixtur; und
die zweite Flüssigkeit Wasser als ein Wasserstoffquellmaterial als den zweiten Teil der Reaktionsmixtur umfasst.

10. Wasserstoffgenerator nach einem der vorangehenden Ansprüche, wobei eine Vielzahl (6) von Gehäusen vorgesehen ist, die jeweils ein Generatorvolumen umschließen; und wobei zumindest zwei Gehäuse jeweils eine Überflusskammer aufweisen, die sich in eine gemeinsame Nachreaktionskammer (108) für die sekundäre Generation von Wasserstoff entleeren.

11. Ein System (200) zum Erzeugen von Wasserstoff, umfassend:
- eine erste Vorratseinrichtung (210) zum Speichern einer ersten Flüssigkeit mit einem ersten Teil einer Reaktionsmixtur; wobei die erste Flüssigkeit eine Suspension umfassend Silikonöl ist;
- eine zweite Vorratseinrichtung (212) zum Speichern einer zweiten Flüssigkeit mit einem zweiten Teil der Reaktionsmixtur; wobei die zweite Flüssigkeit Wasser umfasst;
wobei der erste und der zweite Teil der Reaktionsmischung ausgestaltet sind, in einer chemischen Reaktion zu reagieren, um Wasserstoff zu erzeugen;
einen Wasserstoffextraktionspunkt (220); und
einen Wasserstoffgenerator gemäß einem der Ansprüche 1 bis 10;
wobei die erste Vorratseinrichtung die erste Flüssigkeit den ersten Einlässen zur Verfügung stellt; und wobei die zweite Vorratseinrichtung die zweite Flüssigkeit den zweiten Einlässen zur Verfügung stellt.

12. Ein Fahrzeug (300), das zumindest teilweise mit Wasserstoff betrieben wird, umfassend:
- ein wasserstoffbetriebenen Antriebsmittel (310), und
- eine Wasserstoffquelle (312);
wobei als die Wasserstoffquelle ein System zur Erzeugung von Wasserstoff nach Anspruch 11 zur Verfügung gestellt ist; und
wobei die Wasserstoffquelle Wasserstoff zum Antrieb des wasserstoffbetriebenen Antriebsmittels zur Verfügung stellt.

13. Ein Verfahren (400) zum Erzeugen von Wasserstoff mit einem Wasserstoffgenerator nach einem der Ansprüche 1 bis 10, wobei das Verfahren die folgenden Schritte umfasst:
a1) Zurverfügungstellen (412) einer ersten Flüssigkeit mit einem ersten Teil einer Reaktionsmixtur in einem Reaktionsvolumen; wobei die erste Flüssigkeit eine Suspension mit Silikonöl ist;
wobei das Silikonöl einen ersten Silikonölpart mit einer Dichte aufweist, die geringer ist als die Dichte des Wassers und einen zweiten Silikonölpart mit einer Dichte, die größer ist als die Dichte von Wasser;
a2) Zurverfiigungstellen (414) einer zweiten Flüssigkeit mit einem zweiten Teil der Reaktionsmixtur in dem Reaktionsvolumen; wobei die zweite Flüssigkeit Wasser umfasst;
wobei der erste und zweite Teil der Reaktionsmixtur zur Verfügung gestellt werden, um in einer chemischen Reaktion, in der Wasserstoff generiert wird, miteinander zu reagieren,
b) Zurverfügungstellen (416) einer Silikonschicht oben auf dem Niveau der Reaktionsmixtur mittels des ersten Silikonöls; wobei die Silikonschicht eine Barriere für Wasserdampf zur Verfügung stellt und wobei die Silikonschicht durchgängig für Wasserstoff ist;
c) Reagieren (418) der Reaktionsmixtur, wobei gasförmiger Wasserstoff generiert wird;
d) Durchführen (420) des Wasserstoffs durch die Barriere; und
e) Zurverfiigungstellen (422) des Wasserstoffs für weitere Zwecke.

14. Eine Verwendung i) eines Wasserstoffgenerators nach einem der Ansprüche 1 bis 10 oder eines ii) Systems zur Erzeugung von Wasserstoff nach Anspruch 11, in einem Fahrzeug.

## Revendications

1. Un générateur d'hydrogène (10) pour fournir de l'hydrogène à partir d'une suspension, comprenant
- au moins un boîtier (12) enfermant un générateur de volume (14) comprenant un premier volume de réaction (16) pour fournir un mélange réactionnel et un volume de collecte (18) pour capturer l'hydrogène émettant du volume de réaction;
- une première pluralité de premières entrées (20) pour injecter un premier liquide avec une première partie d'un mélange réactionnel dans le volume de réaction; dans lequel le premier liquide est une suspension comprenant de l'huile de silicone (22);
- un seconde pluralité de secondes entrées (22) pour injecter un second liquide avec une seconde partie du mélange réactionnel dans le volume de réaction; dans lequel le second liquide comprend de l'eau;
dans lequel la première et la seconde parties du mélange réactionnel sont configurées pour réagir dans une réaction chimique pour générer de l'hydrogène; et
une barrière (24) entre le volume de réaction et le volume de collecte;
dans lequel la barrière est adaptable dans sa position pour fournir un rapport différent du volume de réaction au volume de collecte;
dans lequel la barrière est perméable à l'hydrogène gazeux; et
dans lequel la barrière fournit au moins une fonction de barrière à la vapeur d'eau et dans lequel la couche de barrière comprend une structure de support (28) pour stabiliser une couche de purification (30), la couche étant perméable à l'hydrogène et imperméable à la vapeur d'eau;
dans lequel la structure de support est supportée de manière mobile par rapport au volume pour diviser d'une manière adaptive le volume dans le volume de réaction et le volume de collecte ; et
dans lequel la couche de purification est renouvelable d'une manière consécutive pendant l'opération.

2. Générateur d'hydrogène selon la revendication 1, dans lequel la couche est une couche d'huile de silicone.

3. Générateur d'hydrogène selon la revendication 1 ou 2, dans lequel la structure de support est fourni sous la forme d'une grille flottante (32) pour nager sur un niveau de liquide de mélange réactionnel (34).

4. Générateur d'hydrogène selon la revendication 1, 2 ou 3, dans lequel la structure de support est fourni de moyens de guidage pour guidage de bulles gazeuses générées dans le liquide de mélange réactionnel vers au moins un bord latéral de la structure de support ;
dans lequel les moyens de guidage comprennent des surfaces inclinées et/ ou des rainures inclinées.

5. Générateur d'hydrogène selon la revendication 1, 2, 3 ou 4, dans lequel la structure de support est fourni d'un élément de refroidissement.

6. Générateur d'hydrogène selon l'une quelconque des revendications précédentes, dans lequel au moins une ouverture de drainage latéral (74) est prévue sur une paroi latérale du boîtier; dans lequel une chambre de débordement (78) est prévue;
dans lequel la au moins une ouverture de drainage latéral ouvre dans la chambre de débordement ;
dans lequel la chambre de débordement se déverse dans une chambre de réaction secondaire (88) pour une génération secondaire d'hydrogène.

7. Générateur d'hydrogène selon l'une quelconque des revendications précédentes, dans lequel il est prévu:
i) au moins une ouverture de drainage (68) pour décharger le liquide usé du volume de réaction;
ii) au moins une ouverture de sortie (60) pour décharger de l'hydrogène du volume de collecte ; et/ ou
iii) au moins une ouverture de rinçage (80) près d'un côté inférieur d'une paroi latérale avec au moins une ouverture de drainage latérale; dans lequel l'ouverture de rinçage est configurée pour émettre un jet d'eau pour nettoyer l'au moins une ouverture de drainage latéral.

8. Générateur d'hydrogène selon l'une quelconque des revendications précédentes, dans lequel un échangeur de chaleur (102) est prévu dans le volume de collecte pour retirer l'énergie thermique de l'intérieur du volume de collecte.

9. Générateur d'hydrogène selon l'une des revendications précédentes, dans lequel le mélange réactionnel comprend le premier liquide et le second liquide prévoyant un mélange réactionnel (104) de la première et seconde partie;
dans lequel l'huile de silicone comprend une première partie de l'huile de silicone avec uns densité inférieur que la densité d'eau ; et une seconde partie de l'huile de silicone avec uns densité supérieure que la densité d'eau; et
dans lequel il est prévu que:
I) le premier liquide comprend l'huile de silicone en tant que premier porteur de liquide et une source matérielle d'hydrogène en tant que la première partie du mélange réactionnel ; et
le second liquide comprend de l'eau en tant que second porteur de liquide et une substance catalytique en tant que seconde partie du mélange réactionnel ; ou
II) le premier liquide comprend l'huile de silicone en tant que premier porteur de liquide et une substance réactionnelle en tant que la première partie de mélange réactionnel ; et
le second liquide comprend l'eau en tant que source matérielle d'hydrogène en tant que seconde partie du mélange réactionnel.

10. Générateur d'hydrogène selon l'une quelconque des revendications précédentes, dans lequel une pluralité (106) de boîtier est prévu ; chaque boîtier enferme un générateur de volume; et
dans lequel au moins deux boîtiers, dans lequel chaque des deux boîtiers sont fourni avec une chambre de débordement se déverse dans une chambre de réaction secondaire (108) commune pour une génération secondaire d'hydrogène.

11. Un système (200) pour génération d'hydrogène, comprenant :
un premier dispositif de stockage (210) pour stocker un premier liquide avec une première partie d'un mélange réactionnel ; dans lequel le premier liquide est une suspension comprenant de l'huile de silicone ;
un second dispositif de stockage (212) pour stocker un second liquide avec une seconde partie du mélange réactionnel ; dans lequel le second liquide comprend de l'eau ;
dans lequel la première et la seconde partie du mélange réactionnel configuré de réagir dans une réaction chimique pour générer de l'hydrogène ;
un lieu de prélèvement d'hydrogène (220) ; et
un générateur d'hydrogène selon quelconque des revendications 1 à 10 ;
dans lequel le premier dispositif de stockage fournit le premier liquide aux premières entrées; et le second dispositif de stockage fournit le second liquide aux deuxièmes entrées

12. Un véhicule (300) fonctionnant au moins en partie par l'hydrogène, comprenant :
un moyen d'entraînement opéré par l'hydrogène (310) ; et
une source d'hydrogène (312) ;
dans lequel, comme source d'hydrogène, un système pour générer l'hydrogène selon revendication 11 est prévu ; et
dans lequel la source d'hydrogène fournit de l'hydrogène pour entrainer le moyen d'entraînement opéré par l'hydrogène.

13. Procédé (400) pour générer l'hydrogène avec un générateur d'hydrogène selon l'une quelconque des revendications 1 à 10, le procédé comprenant les étapes suivantes :
a1) fournir (412) un premier liquide avec une première partie d'un mélange réactionnel dans un volume de réaction ; dans le lequel le premier liquide est une suspension comprenant de l'huile d'olive ;
dans lequel l'huile de silicone comprend une première partie de l'huile de silicone avec uns densité inférieur que la densité d'eau ; et une seconde partie de l'huile de silicone avec uns densité supérieure que la densité d'eau ;
a2) fournir (414) un second liquide avec une seconde partie du mélange réactionnel dans le volume de réaction ; dans lequel le second liquide comprend de l'eau ;
dans lequel la première partie et la seconde partie du mélange réactionnel sont fourni pour réagir dans une réaction chimique dans lequel l'hydrogène est généré ;
b) prévoir (416) une couche de silicone sur le niveau haut du mélange réactionnel par la première l'huile de silicone ; la couche de silicone prévoie une barrière pour vapeur d'eau et qui est perméable pour l'hydrogène ;
c) réaction (418) du mélange réactionnel ; générant de l'hydrogène gazeux ;
d) passer (420) de l'hydrogène à travers la barrière ; et
e) prévoir (422) l'hydrogène pour d'autre objet.

14. Une utilisation de i) un générateur d'hydrogène selon quelconque des revendication 1 à 10, ou de ii) un système pour générer l'hydrogène selon la revendication 11 dans un véhicule.
